(19) Europäisches Patentamt
European Patent Office
Office européen des brevets

(11) **EP 4 697 456 A1**

(12) **EUROPEAN PATENT APPLICATION**

(43) Date of publication:
18.02.2026   Bulletin 2026/08

(21) Application number: 25186325.4

(22) Date of filing: **30.06.2025**

(51) International Patent Classification (IPC):
*H01M 10/658* (2014.01)   *H01M 50/289* (2021.01)
*H01M 10/647* (2014.01)   *H01M 50/209* (2021.01)
*H01M 50/293* (2021.01)

(52) Cooperative Patent Classification (CPC):
H01M 10/658; H01M 10/647; H01M 50/209;
H01M 50/293

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  13.08.2024  JP 2024134771

(71) Applicant: **Prime Planet Energy & Solutions, Inc.
Chuo-ku, Tokyo 103-0022 (JP)**

(72) Inventors:
• **OMURA, Tetsuji**
  **Tokyo 103-0022 (JP)**
• **KOGAMI, Nao**
  **Tokyo 103-0022 (JP)**

(74) Representative: **Kuhnen & Wacker
Patent- und Rechtsanwaltsbüro PartG mbB
Prinz-Ludwig-Straße 40A
85354 Freising (DE)**

(54) **BATTERY ASSEMBLY**

(57)    An insulating member (200) provided between a plurality of batteries (100) includes a first portion (211, 210) and a second portion (212, 220) arranged side by side in a first direction, the first portion (211, 210) is provided in a first region including a region of a housing (120) of each of the plurality of batteries (100) when viewed in a first direction, the second portion (212, 220) is provided in a second region formed on an inner side with respect to the region of the housing (120) of each of the plurality of batteries (100) when viewed in the first direction, the second portion (212, 220) is in abutment with a battery (100), on at least one side, of the plurality of batteries (100) located on both sides with respect to the insulating member (200), and a heat insulating property of the first portion (211, 210) is equal to or higher than a heat insulating property of the second portion (212, 220).

FIG.3

EP 4 697 456 A1

## Description

CROSS REFERENCE TO RELATED APPLICATIONS

This nonprovisional application is based on Japanese Patent Application No. 2024-134771 filed on August 13, 2024 with the Japan Patent Office, the entire contents of which are hereby incorporated by reference.

BACKGROUND OF THE INVENTION

Field of the Invention

The present technology relates to a battery assembly.

Description of the Background Art

In a battery assembly in which a plurality of batteries are arranged, an insulating member has been conventionally disposed between the plurality of batteries. A battery assembly described in Japanese Patent Laying-Open No. 2022-149419 is an exemplary conventional battery assembly.

SUMMARY OF THE INVENTION

It is required to prevent heat propagation (thermal diffusion) between adjacent batteries by disposing the insulating member. Moreover, it is also required to stably hold the plurality of batteries. From the viewpoint of achieving both the prevention of thermal diffusion and the holding of the batteries, there is still room for improvement in the conventional battery assembly.

It is an object of the present technology to provide a battery assembly in which both prevention of thermal diffusion and holding of batteries are achieved.

The present technology provides the following battery assembly.

[1] A battery assembly comprising: a plurality of batteries each including a housing that accommodates an electrode assembly, the plurality of batteries being arranged in a first direction; and an insulating member provided between the plurality of batteries, wherein the insulating member includes a first portion and a second portion arranged side by side in the first direction, the first portion is provided in a first region including a region of the housing of each of the plurality of batteries when viewed in the first direction, the second portion is provided in a second region formed on an inner side with respect to the region of the housing of each of the plurality of batteries when viewed in the first direction, the second portion is in abutment with a battery, on at least one side, of the plurality of batteries located on both sides with respect to the insulating member, and a heat insulating property of the first portion is equal to or higher than a heat insulating property of the second portion.

[2] The battery assembly according to [1], wherein the first portion and the second portion are composed of the same material.

[3] The battery assembly according to [1], wherein the heat insulating property of the first portion is higher than the heat insulating property of the second portion.

[4] The battery assembly according to [1], wherein an elastic modulus of the second portion is lower than an elastic modulus of the first portion.

[5] The battery assembly according to any one of [1] to [4], wherein when a slope of a compression ratio-load curve until a compression ratio of the insulating member becomes 20% is defined as an elastic modulus of the insulating member, the elastic modulus of the insulating member is 1 MPa or more and 10 MPa or less.

[6] The battery assembly according to any one of [1] to [5], wherein a heat conductivity of the first portion is 0.15 W/mK or less.

[7] The battery assembly according to any one of [1] to [6], wherein a thickness of the insulating member in the first direction is 20 mm or less.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a perspective view showing a battery assembly.

Fig. 2 is a perspective view of a battery included in the battery assembly.

Fig. 3 is a diagram showing a configuration of an insulating member (separator) according to a first embodiment.

Fig. 4 is a diagram showing a configuration of an insulating member (separator) according to a second embodiment.

Fig. 5 is a first diagram for illustrating a distribution of a load acting on a secondary battery.

Fig. 6 is a second diagram for illustrating the distribution of the load acting on the secondary battery.

Fig. 7 is a diagram schematically showing an apparatus for finding a relation between a compression ratio and a load of the separator.

Fig. 8 is a diagram showing a relation of compression ratio-load of the separator.

## DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode.

The "battery" in the present specification can be mounted on vehicles such as a hybrid electric vehicle (HEV), a plug-in hybrid electric vehicle (PHEV), and a battery electric vehicle (BEV). It should be noted that the use of the "battery" is not limited to the use in a vehicle.

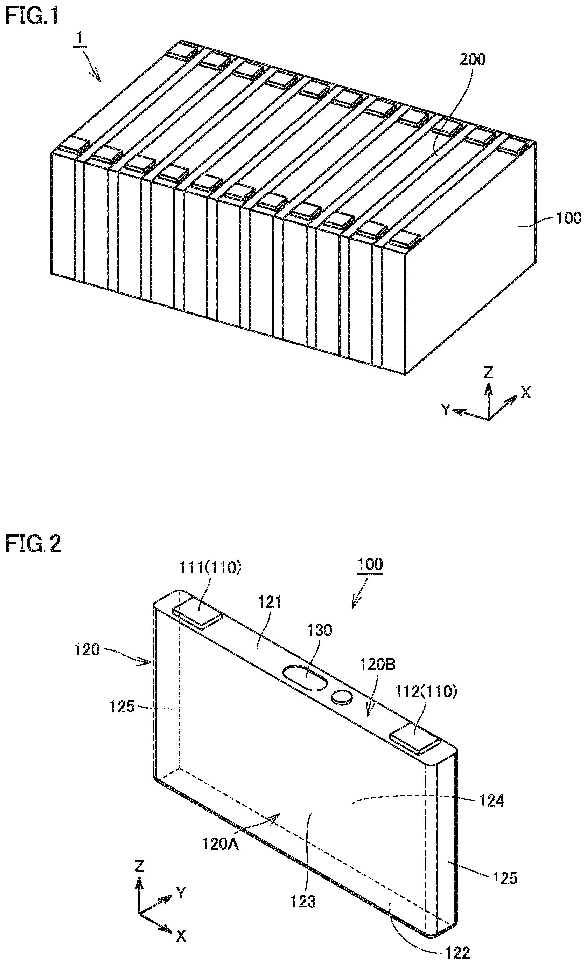

Fig. 1 is a perspective view of a battery module according to the present embodiment. As shown in Fig. 1, battery assembly 1 includes batteries 100 and separators 200. Batteries 100 and separators 200 are arranged alternately along a Y axis direction (first direction). Batteries 100 and separators 200 arranged are held with batteries 100 and separators 200 being restrained in the Y axis direction using restraint members (bind bars and end plates) (not shown) or a pack case (not shown).

The plurality of batteries 100 are batteries each having a prismatic shape, and are provided along the Y axis direction. The plurality of batteries 100 are electrically connected together by a bus bar (not shown).

Separators 200 are provided between the plurality of batteries 100. Each of separators 200 is an insulating member that prevents unintended electrical conduction between adjacent batteries 100. Separator 200 secures an electrical insulation property between adjacent batteries 100. Separator 200 can also be provided between a battery 100 and an end plate (not shown).

Fig. 2 is a perspective view showing each battery 100. As shown in Fig. 2, battery 100 has a prismatic shape. Battery 100 has electrode terminals 110, a housing 120, and a gas-discharge valve 130.

Electrode terminals 110 are formed on housing 120. Electrode terminals 110 have a positive electrode terminal 111 and a negative electrode terminal 112 arranged side by side along an X axis direction (second direction) orthogonal to the Y axis direction (first direction). Positive electrode terminal 111 and negative electrode terminal 112 are provided to be separated from each other in the X axis direction.

Housing 120 has a rectangular parallelepiped shape and forms an external appearance of battery 100. Housing 120 includes: a case main body 120A that accommodates an electrode assembly (not shown) and an electrolyte solution (not shown); and a sealing plate 120B that seals an opening of case main body 120A. Sealing plate 120B is joined to case main body 120A by welding.

Housing 120 has an upper surface 121, a lower surface 122, a first side surface 123, a second side surface 124, and two third side surfaces 125.

Upper surface 121 is a flat surface orthogonal to a Z axis direction (third direction) orthogonal to the Y axis direction and the X axis direction. Electrode terminals 110 are disposed on upper surface 121. Lower surface 122 faces upper surface 121 along the Z axis direction.

Each of first side surface 123 and second side surface 124 is constituted of a flat surface orthogonal to the Y axis direction. Each of first side surface 123 and second side surface 124 has the largest area among the areas of the plurality of side surfaces of housing 120. Each of first side surface 123 and second side surface 124 has a rectangular shape when viewed in the Y axis direction. Each of first side surface 123 and second side surface 124 has a rectangular shape in which the X axis direction corresponds to the long-side direction and the Z axis direction corresponds to the short-side direction when viewed in the Y axis direction.

The plurality of batteries 100 are stacked such that first side surfaces 123 of batteries 100, 100 adjacent to each other in the Y direction face each other and second side surfaces 124 of batteries 100, 100 adjacent to each other in the Y axis direction face each other. Thus, positive electrode terminals 111 and negative electrode terminals 112 are alternately arranged in the Y axis direction in which the plurality of batteries 100 are stacked.

Gas-discharge valve 130 is provided in upper surface 121. When the temperature of battery 100 is increased (thermal runaway) and internal pressure of housing 120 becomes more than or equal to a predetermined value due to gas generated inside housing 120, gas-discharge valve 130 discharges the gas to outside of housing 120.

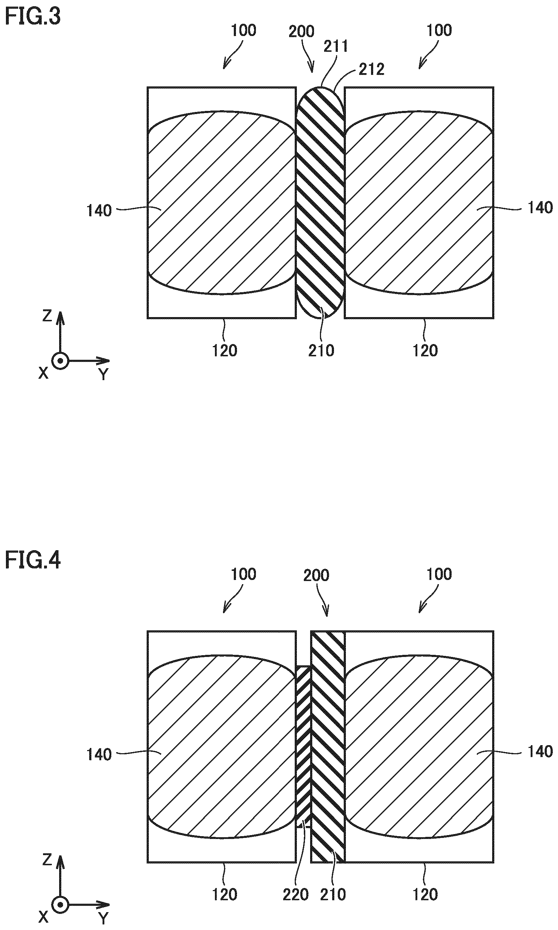

Fig. 3 is a diagram showing a configuration of a separator 200 (insulating member) according to one embodiment.

As shown in Fig. 3, separator 200 is constituted of a heat insulating material 210. Heat insulating material 210 includes a first portion 211 and second portions 212. In the example shown in Fig. 3, first portion 211 and second portions 212 are constituted of a single member and are composed of the same material. Therefore, first portion 211 and second portions 212 have the same heat insulating property.

First portion 211 and second portions 212 are provided side by side in the Y axis direction. In the example shown in Fig. 3, second portions 212 are formed on both sides with respect to first portion 211 in the Y axis direction. Second portions 212 are in abutment with two batteries 100 located on both sides with respect to separator 200. However, second portion 212 may be provided only on one side with respect to first portion 211 in the Y axis direction.

In the example shown in Fig. 3, when viewed in the Y axis direction, a region (first region) in which first portion 211 is provided is the same as the region of housing 120. However, first portion 211 may be provided in a region including the region of housing 120, and may be provided in a range wider than the region of housing 120. Further, when viewed in the Y axis direction, a region (second region) in which second portions 212 are provided is formed on the inner side with respect to housing 120 of battery 100.

Fig. 4 is a diagram showing a configuration of a separator 200 (insulating member) according to another embodiment.

In an example shown in Fig. 4, separator 200 includes a heat insulating material 210 (first portion) and an elastic body 220 (second portion). Heat insulating material 210 and elastic body 220 are constituted of different members and are composed of different materials. Specifically, the heat insulating property of heat insulating material 210 is higher than the heat insulating property of elastic body 220. Further, elastic body 220 is more likely to be deformed than heat insulating material 210. Therefore, elastic body 220 has an elastic modulus lower than that of heat insulating material 210.

Heat insulating material 210 and elastic body 220 are provided side by side in the Y axis direction. In the example shown in Fig. 4, elastic body 220 is formed on one side with respect to heat insulating material 210 in the Y axis direction. Elastic body 220 is in abutment with battery 100 located on one side with respect to separator 200. However, elastic bodies 220 may be provided on both sides with respect to heat insulating material 210 in the Y axis direction. Moreover, heat insulating materials 210 may be provided on both sides with respect to elastic body 220.

In the example shown in Fig. 4, when viewed in the Y axis direction, a region (first region) in which heat insulating material 210 is provided is the same as the region of housing 120. However, heat insulating material 210 may be provided in a region including an outer side with respect to housing 120. Moreover, when viewed in the Y axis direction, a region (second region) in which elastic body 220 is provided is formed on the inner side with respect to housing 120 of battery 100.

Heat insulating material 210 in each of the examples of Figs. 3 and 4 is preferably composed of a material (heat insulating material) having a predetermined heat insulating property. Examples of the heat insulating material include glass wool, rock wool, cellulose fiber, aerogel, and the like. Moreover, a molding material in which an inorganic filler and a binder are mixed, a material obtained by solidifying an inorganic fiber and an inorganic powder, a foamed resin containing air in its layer, or the like may be used.

The heat conductivity of heat insulating material 210 is preferably about 0.15 W/mK or less, and is more preferably about 0.1 W/mK or less.

Elastic body 220 in the example of Fig. 4 is preferably composed of a material (elastic body) having a predetermined elasticity. Examples of elastic body 220 include a silicone rubber, a fluoro-rubber, an urethane rubber, a natural rubber, a styrene-butadiene rubber, a butyl rubber, an ethylene propylene rubber (EPM, EPDM), a butadiene rubber, an isoprene rubber, a norbornene rubber, and the like.

It should be noted that apart from the elastic modulus of elastic body 220, the elastic modulus of separator 200 as a whole can be adjusted by the shape of separator 200.

The thickness of separator 200 (clearance between batteries 100) is preferably about 20 mm or less. In the stacking structure of heat insulating material 210 and elastic body 220 as shown in Fig. 4, the thickness of each of heat insulating material 210 and elastic body 220 is preferably about 10 mm or less, and is more preferably about 5 mm or less.

One required function of separator 200 is to prevent heat propagation (thermal diffusion) between adjacent batteries 100. In separator 200 shown in each of Figs. 3 and 4, since first portion 211 having a certain heat insulating property is provided in the region including at least the region of housing 120, heat transfer by radiation or convection at an outer peripheral portion of housing 120 can be suppressed, thereby effectively suppressing propagation of heat between adjacent batteries 100.

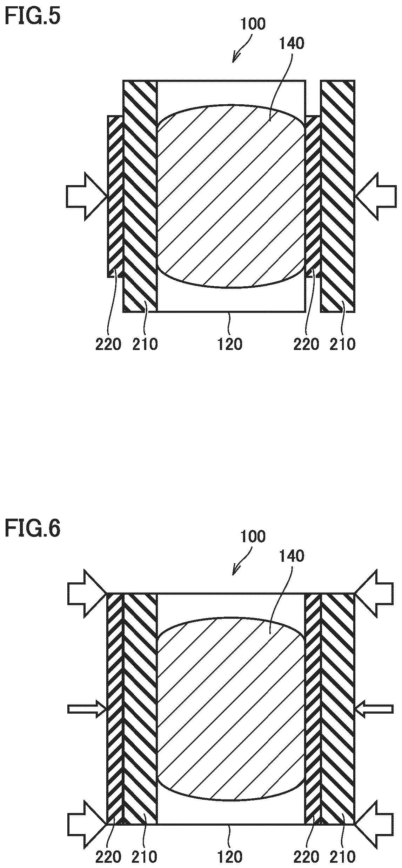

Next, the distribution of a load (restraint force) acting on battery 100 will be described with reference to Figs. 5 and 6. In battery assembly 1, the plurality of batteries 100 are restrained and held in the Y axis direction. Here, it is required to stably hold the plurality of batteries 100. In particular, when battery assembly 1 is mounted on a vehicle such as a car, it is preferable to stably hold electrode assembly 140 in housing 120 from the viewpoint of improving vibration resistance. By stably holding electrode assembly 140 and suppressing movement of electrode assembly 140 in housing 120, it is possible to suppress a failure due to damage of a connection portion between electrode assembly 140 and a current collector (not shown).

On the other hand, housing 120 having a prismatic shape has such a characteristic that rigidity is high at its end portion (outer peripheral portion of each of first side surface 123 and second side surface 124).

In an example (comparative example) shown in Fig. 6, since a separator 200 has the same thickness across the entire region of housing 120, restraint force tends to be large at an end portion of housing 120 having the high rigidity, and restraint force tends to be small at the central portion of electrode assembly 140.

On the other hand, in the example shown in Fig. 5 (example of the present technology), since the region in which elastic body 220 is provided (abutment region of separator 200) is limited and the thickness of separator 200 is reduced at the end portion of housing 120, restraint force is concentrated on the central portion of electrode assembly 140, with the result that electrode assembly 140 can be stably held in housing 120.

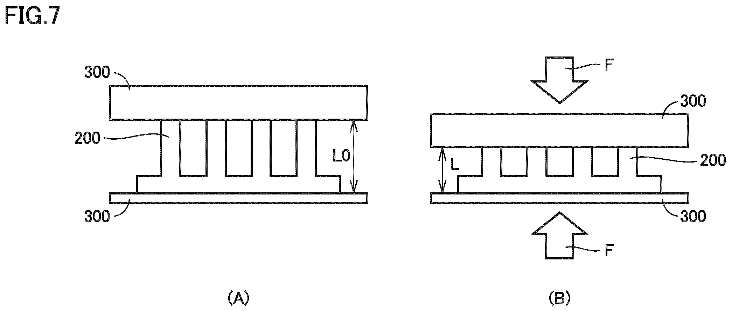

Here, when the area of the long side surface (each of first side surface 123 and second side surface 124) of battery 100 is defined as S1 and the area of the thick portion (in the case where the separator is constituted of a member having a plurality of protrusions as shown in Fig. 7, the area of a region formed by connecting an plurality of protrusions located at the outermost periphery) or the abutment portion (the area of elastic body 220 in the example of Fig. 5) of separator 200 is defined as S2, a ratio (S1/S2) of S1 and S2 is preferably about 1.05 or more and 1.67 or less. Further, S2 is preferably about 85% or less of S1 (S1/S2 is about 1.18 or less).

However, the ratio of S1 and S2 is not limited to the above range. In general, as the size of battery 100 is smaller, a preferable value of S1/S2 tends to be larger.

Further, the thick portion or the abutment portion (S2) of separator 200 is preferably about 80% or more, more preferably about 90% or more, of the area of a contact portion of electrode assembly 140 with the inner surface of housing 120 (area excluding a curvature portion when electrode assembly 140 is of a wound type).

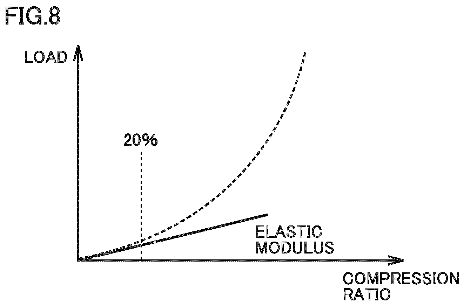

Fig. 7 is a diagram schematically showing an apparatus for finding a relation between a compression ratio and a load of separator 200. Fig. 8 is a diagram showing a relation of compression ratio-load of separator 200.

As shown in Fig. 7, separator 200 is compressed using a jig 300 so as to find a relation between a load F (reaction force) and the compression ratio at that time. The compression ratio is found by the following formula:

$$\text{Compression ratio} = (L0\text{-}L)/L0$$

As shown in Fig. 8, the slope of a compression ratio-load curve until the compression ratio becomes 0.2 (20 percent) is defined as an "elastic modulus" of separator 200. The "elastic modulus" of separator 200 according to the present embodiment is preferably about 1 MPa or more and 10 MPa or less.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery assembly comprising:

   a plurality of batteries (100) each including a housing (120) that accommodates an electrode assembly (140), the plurality of batteries (100) being arranged in a first direction; and
   an insulating member (200) provided between the plurality of batteries (100), wherein
   the insulating member (200) includes a first portion (211, 210) and a second portion (212, 220) arranged side by side in the first direction,
   the first portion (211, 210) is provided in a first region including a region of the housing (120) of each of the plurality of batteries (100) when viewed in the first direction,
   the second portion (212, 220) is provided in a second region formed on an inner side with respect to the region of the housing (120) of each of the plurality of batteries (100) when viewed in the first direction,
   the second portion (212, 220) is in abutment with a battery (100), on at least one side, of the plurality of batteries (100) located on both sides with respect to the insulating member (200), and
   a heat insulating property of the first portion (211, 210) is equal to or higher than a heat insulating property of the second portion (212, 220).

2. The battery assembly according to claim 1, wherein the first portion (211) and the second portion (212) are composed of the same material.

3. The battery assembly according to claim 1, wherein the heat insulating property of the first portion (210) is higher than the heat insulating property of the second portion (220).

4. The battery assembly according to claim 1, wherein an elastic modulus of the second portion (220) is lower than an elastic modulus of the first portion (210).

5. The battery assembly according to any one of claims 1 to 4, wherein when a slope of a compression ratio-load curve until a compression ratio of the insulating member (200) becomes 20% is defined as an elastic modulus of the insulating member (200), the elastic modulus of the insulating member (200) is 1 MPa or more and 10 MPa or less.

6. The battery assembly according to any one of claims 1 to 5, wherein a heat conductivity of the first portion (211, 210) is 0.15 W/mK or less.

7. The battery assembly according to any one of claims 1 to 6, wherein a thickness of the insulating member (200) in the first direction is 20 mm or less.

FIG.1

FIG.2

FIG.3

FIG.4

8

FIG.5

FIG.6

FIG.7

300

200

300

L0

(A)

F

300

200

300

L

F

(B)

EP 4 697 456 A1

FIG.8

Europäisches
Patentamt

European
Patent Office

Office européen
des brevets

## EUROPEAN SEARCH REPORT

**Application Number**

EP 25 18 6325

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 117 088 A1 (NICHIAS CORP [JP]) 11 January 2023 (2023-01-11) * paragraphs [0026], [0027], [0034]; claims 2, 4; figure 1A * | 1,3-6 | INV. H01M10/658 H01M50/289 H01M10/647 H01M50/209 |
| X | US 2024/258636 A1 (IWATA RYOSUKE [JP] ET AL) 1 August 2024 (2024-08-01) * paragraphs [0036], [0039], [0048], [0057] - [0059]; figures 1, 4 * | 1,3,4,6,7 | H01M50/293 |
| X | US 2024/170794 A1 (OMURA TETSUJI [JP]) 23 May 2024 (2024-05-23) * claims 1, 9 * | 1,2 | |

**TECHNICAL FIELDS SEARCHED (IPC)**

H01M

The present search report has been drawn up for all claims

| Place of search | Date of completion of the search | Examiner |
|---|---|---|
| The Hague | 21 November 2025 | Schmitt, Sebastian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................................
& : member of the same patent family, corresponding
document

EPO FORM 1503 03.82 (P04C01)

## EP 4 697 456 A1

## ANNEX TO THE EUROPEAN SEARCH REPORT
## ON EUROPEAN PATENT APPLICATION NO.

EP 25 18 6325

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2025

| Patent document cited in search report | Publication date | Patent family member(s) | | Publication date |
|---|---|---|---|---|
| EP 4117088 A1 | 11-01-2023 | CN | 115244765 A | 25-10-2022 |
| | | EP | 4117088 A1 | 11-01-2023 |
| | | JP | 7292231 B2 | 16-06-2023 |
| | | JP | 2021140968 A | 16-09-2021 |
| | | KR | 20220145874 A | 31-10-2022 |
| | | US | 2023114956 A1 | 13-04-2023 |
| | | WO | 2021177205 A1 | 10-09-2021 |
| US 2024258636 A1 | 01-08-2024 | CN | 118431661 A | 02-08-2024 |
| | | EP | 4415110 A1 | 14-08-2024 |
| | | JP | 7713977 B2 | 28-07-2025 |
| | | JP | 2024108539 A | 13-08-2024 |
| | | KR | 20240120666 A | 07-08-2024 |
| | | US | 2024258636 A1 | 01-08-2024 |
| US 2024170794 A1 | 23-05-2024 | CN | 118073751 A | 24-05-2024 |
| | | JP | 7641940 B2 | 07-03-2025 |
| | | JP | 2024075147 A | 03-06-2024 |
| | | US | 2024170794 A1 | 23-05-2024 |

EPO FORM P0459

For more details about this annex : see Official Journal of the European Patent Office, No. 12/82

**EP 4 697 456 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024134771 A

- JP 2022149419 A